# EUROPÄISCHE PATENTANMELDUNG

(11) **EP 1 974 602 A1**
(43) Veröffentlichungstag der Anmeldung: **01.10.2008**
(21) Anmeldenummer: 08153364.8
(22) Anmeldetag: 27.03.2008
(51) Int. Cl.: A01G 1/08

(54) **Wurzelsperre**

(30) Priorität: 29.03.2007 DE 202007004750 U
(71) Anmelder: Siwoplan GmbH, 26160 Bad Zwischenahn (DE)
(72) Erfinder: Wolff, Siegmar, 26160 Bad Zwischenahn (DE)
(74) Vertreter: Eisenführ, Speiser & Partner

(57) **Zusammenfassung**

Die Erfindung betrifft eine Wurzelsperre zum Umgeben einer Pflanze, insbesondere einer Bambuspflanze, um das Austreiben ihrer Wurzeln zu verhindern, mit einer zu einem Folienring geschlossenen Kunststoffbahn aus einem thermoplastischem Material und/oder anderem Kunststoffmaterial zum Umgeben der Pflanze wobei die Verbindung zu dem Folienring durch eine durchgehende Schweißnaht erfolgt, oder durch eine durchgehende Naht, die durch eine chemische Verbindung hergestellt wird, insbesondere als Verklebung hergestellt wird.

## Beschreibung

Die Erfindung betrifft eine Wurzelsperre zum Verhindern des Austreibens von Wurzeln, insbesondere Bambuswurzeln gemäß dem Oberbegriff des Anspruchs 1. Die Erfindung betrifft weiterhin eine Verpackung mit einer Wurzelsperre.

Es sind Pflanzen bekannt, die schön anzusehen sind, jedoch Wurzeln aufweisen, die sich mit der Zeit immer weiter ausbreiten. Solche Wurzeln können auf Dauer mechanische Schäden anrichten wie beispielsweise Gehwegplatten anheben. Insbesondere Bambuspflanzen, die sich als Gartenpflanze zunehmender Beliebtheit erfreuen, weisen äußerst hartnäckige Wurzeln auf. Diese Wurzeln können sich durch kleinste Zwischenräume drängen und dann mit der Zeit eine enorme Kraft entfalten.

Um dennoch nicht auf Bambuspflanzen oder dergleichen verzichten zu müssen, ist es bekannt, Wurzelsperren in den Boden um die betreffende Pflanze herum einzubringen. Hierzu werden Kunststoffbahnen verwendet, die für die betreffenden Wurzeln undurchdringbar sind. Eine solche Kunststoffbahn wird vor Ort auf die entsprechende Länge abgeschnitten und zu einem Folienring gerollt, der die Pflanze dann als Wurzelsperre umgeben soll. Zum Schließen des Folienrings werden zwei Metallschienen verwendet, die in einem überlappenden Bereich der Folienbahn gegeneinander verschraubt werden. Ein radiales Umgeben der betreffenden Pflanze kann in der Regel ausreichen. Ein Abschluss unterhalb der Pflanze ist nicht erforderlich, solange die die Pflanze radial umgebende Folie tief genug in den Boden reicht. Somit kann eine Verbindung zum Grundwasser hin verbleiben und das Versickern von Regen oder Gießwasser bleibt möglich.

Es ist zu beachten, dass insbesondere für Bambuswurzeln äußerst widerstandsfähige Materialien als Wurzelsperre zu verwenden sind. Eine Kunststoffbahn, die solche Anforderungen erfüllt, ist in der Regel äußerst hart und entsprechend schwer zu handhaben. Zum Abschneiden einer solchen Folie ist eine handelsübliche Schere regelmäßig nicht ausreichend. Mitunter ist es erforderlich - je nach Folienstärke - zum Zuschneiden eine Säge zu verwenden. Auch die zugeschnittene Kunststoffbahn ist sperrig und entsprechend schwer zu handhaben. Zum Fertigen einer Wurzelsperre mit 1,5 m Durchmesser ist eine Folienbahn von fast 5 m Länge erforderlich. Diese Folie muss zu einem Folienring gerollt und an den Enden mit Löchern versehen werden, um die Metallschienen dort hindurch mittels Verschraubungen gegeneinander verspannen zu können. Nicht selten müssen solche Löcher gebohrt werden. Es ist somit auch das Rollen und das Anbringen der Schienen äußerst aufwendig.

Es kommt hinzu, dass eine feste Verbindung an den Enden der Folienbahn im überlappenden Bereich nur im Bereich der Verschraubung wirklich sichergestellt werden kann. Zwischen den Verschraubungen reicht der kleinste Schlitz zwischen der Überlappung aus, damit eine Bambuswurzel dort hineinwachsen kann. Solch eine Bambuswurzel kann dann beim Wachsen kräftig genug sein, in einem von den Verschraubungen beabstandeten Bereich die Schienen auseinander zu drücken und aus der Wurzelsperre herauszuwachsen. Nicht zuletzt ist zu beachten, dass auch das tatsächliche Verhindern des Herauswachsens von Wurzeln im Bereich der überlappenden Verbindung von den Fähigkeiten des Anwenders abhängt, der den Folienring ausgebracht und die Verbindung bei der Überlappung vorgenommen hat.

Bei bekannten Folienringen als Wurzelsperre ist somit eine schwierige Handhabung zu beklagen und eine tatsächlich wirksame Verhinderung des Ausbreitens der Wurzeln wie beispielsweise der Bambuswurzeln kann nicht immer sichergestellt werden.

Aufgabe der vorliegenden Erfindung ist es somit, eine Wurzelsperre zu schaffen, die einfach in der Anwendung ist und das Ausbreiten von Wurzeln mit einer hohen Verlässlichkeit verhindern soll.

Erfindungsgemäß wird für die Wurzelsperre gemäß dem Oberbegriff des Anspruchs 1 vorgeschlagen, dass die Verbindung zu dem Folienring durch eine durchgehende Schweißnaht erfolgt. Alternativ wird vorgeschlagen, eine durchgehende Naht durch eine chemische Verbindung insbesondere Verklebung vorzunehmen.

Der Begriff Folienring ist hierbei nicht als auf kreisförmig beschränkend zu verstehen, sondern bezieht sich allein auf die geschlossen umlaufende Ausgestaltung der Folienbahn. Der Begriff "Folienbahn" stellt keine Einschränkung der Folienbahndicke dar.

Eine solche Schweißnaht wird insbesondere vor Auslieferung der Wurzelsperre hergestellt. Eine so vorbereitete Wurzelsperre ist daher einfach in der Handhabung, da sie lediglich noch auseinandergerollt in den Boden / in das Pflanzloch eingebracht werden muss um dann die entsprechende Pflanze in die ausgerollte Wurzelsperre hineinzusetzen. Sämtliche Arbeitsschritte betreffend das Zuschneiden einer Folienbahn, Vornehmen entsprechender Bohrungen zum Anordnen von Verbindungsschienen und das Anordnen der Schienen selbst wird für den Benutzer überflüssig. Insbesondere entfallen auch die Kosten für die Schienen.

Dadurch, dass die Wurzelsperre schienenlos als Folienring erfindungsgemäß ausgebildet ist, werden auch eine Vielzahl von Problemen, die mit der bekannten Schienenlösung zusammenhängen, vermieden. Neben den bereits genannten Problemen der Handhabung wird durch Verwendung einer Schweißnaht anstelle einer Schienenverbindung insbesondere eine potentielle Undichtigkeitsstelle vermieden. Durch das Ausbringen einer durchgängigen Schweißnaht sind die Enden der Kunststoffbahn durchgängig miteinander verbunden und es ist kein Raum zum Eindringen einer Wurzel zwischen die beiden Bahnenabschnitte. Überstehende Bahnabschnitte können direkt an der Naht abgeschnitten werden und vermeiden damit jegliche Vorsprünge, die einen Angriff für eine Wurzel bieten könnten.

Durch Verwendung einer Schweißnaht werden jegliche Probleme, die im Zusammenhang mit Korrosion auftreten können, vermieden. Das Vornehmen einer Schweißnaht macht keine zusätzlichen Materialien erforderlich, die sich im Laufe der Zeit ablösen oder zersetzen könnten. Zudem kann das Gewicht der Wurzelsperre gegenüber der marktüblichen Verbindung mittels Klemmschiene (durch deren Entfall) minimiert werden. Es kommt hinzu, dass eine Schweißnaht im Vergleich zu einer Schienenverbindung eine höhere Elastizität aufweist, die eine bessere Anpassung der Wurzelsperre an das Erdreich ermöglicht.

Vorzugsweise ist das thermoplastische Material eines der Materialien: PEHD; PELD; PELLD; PP; PO; ECB; TPO; FPO; PVC.

Solche Materialien sind besonders günstig im Hinblick auf Verarbeitbarkeit, Materialkosten, Herstellungskosten, Widerstandsfähigkeit insbesondere gegen das Durchdringen von Wurzelwerk und/oder bei der Handhabung für den Endbenutzer.

Weiter bevorzugt weist das Material ein Elastizitätsmodul bis 1000 N/mm² auf. Die hierunter liegenden Werte also eine solche oder geringere Steifigkeit sollen eine günstige Handhabbarkeit sowohl beim Herstellen und auch beim Anwenden als auch für das Verpacken der Wurzelsperre zum Transport gewährleisten.

Günstig ist es, wenn das Material einen Härtegrad von 10-70 N/mm² aufweist. Dieser Härtegrad ist gemäß der DIN 53456 bemessen und wird allgemein auch als Kugelfallhärte bezeichnet. Der Bereich soll eine Härte aufweisen, die hart genug ist, um das Durchdringen von Wurzeln zu verhindern, wobei gleichzeitig eine zu große Härte vermieden werden muss, um noch eine Handhabbarkeit der Wurzelsperre zu gewährleisten. Bei zu hohen Härtegraden ist die Wurzelsperre nicht mehr ausreichend zu rollen oder zu wickeln und wäre dann nicht oder zu schwierig auf die gewünschte Form zum Umgeben einer Pflanze zu bringen.

Vorzugsweise ist die Wurzelsperre UV-beständig und/oder nagetierbeständig. Um einen optimalen Schutz gegen das Ausbreiten von Wurzeln erzielen zu können ist es - je nach Pflanze - erforderlich, dass die Wurzelsperre einen Bereich, etwa 3-5 cm über den Erdboden hinausragt. Damit wird vermieden, dass sich Wurzeln unerkannt an der Erdbodenoberfläche trotz Wurzelsperre ausbreiten können. Hierfür ist es erforderlich, dass der überstehende Abschnitt auch nach vielen Jahren noch gegen Wurzeln widerstandsfähig ist. Der UV-Anteil des Sonnenlichtes ist hierbei eine wesentliche Beschädigungsquelle, gegen die die Wurzelsperre beständig sein sollte. Die Nagetierbeständigkeit betrifft zum einen den überstehenden Bereich. Dieser ist regelmäßig Nagetieren ausgesetzt und muss ihrem Nagetrieb standhalten. Weiterhin muss das Material insbesondere gegen Wühlmäuse beständig sein, damit diese im Erdreich kein Loch in die Folie nagen können, durch das dann auch die Wurzeln dringen könnten.

Vorzugsweise überlappt die Kunststoffbahn im Bereich der Naht. Hierdurch wird eine einfache und haltbare Naht geschaffen. Die Naht kann so breit ausfallen wie der überlappende Bereich und somit eine entsprechend große Kraftübertragung zwischen den verschweißten Abschnitten schaffen. Zum Ausführen der Schweißnaht können die entsprechenden Bereiche übereinander gelegt und dann unter Ausübung eines äußeren Drucks und der Erhitzung des jeweiligen Bereichs fest verschweißt werden.

Gemäß einer weiteren Ausgestaltung ist die Naht als Stehnaht bzw. Stegnaht ausgebildet mit einem Stegbereich der vorzugsweise zum Inneren der Wurzelsperre weist. Hierbei wird je ein Streifen von zwei Endbereichen der Kunststoff- oder Folienbahn im Bereich der zu bildenden Naht abgewinkelt. Diese beiden Streifen werden dann gegeneinandergelegt und verschweißt und bilden in Bezug auf die verbundene Kunststoffbahn einen Steg. Dieser ist vorzugsweise zum Inneren der Wurzelsperre, also zu der zu umgebenden Pflanze hin angeordnet. Hierdurch wird für die betreffenden Wurzeln der Pflanze zusätzlich erschwert, dass diese in die Naht eindringen können.

Günstig ist es, wenn die Überlappung zumindest zum Inneren des Folienrings hin vollständig verschweißt ist. Durch die vollständige Verschweißung zum Inneren des Folienrings hin, also zu der durch die Wurzelsperre umgebenen Pflanze hin wird ein überstehender Bereich der Überlappung vermieden. Somit existieren auch keine Ansatzpunkte für eine Wurzel sich in dem überlappenden Bereich zwischen die beiden Folienabschnitte zu schieben. Vorzugsweise ist auch die Verschweißung nach Außen hin so vorgenommen, dass kein Vorsprung entsteht. Im Innenbereich der Naht, der weder in den Folienring hineinreicht, noch aus ihm herausreicht kann ein Bereich ohne Verschweißung verbleiben, wenn dies beispielsweise aus fertigungstechnischen Gründen günstig ist.

Besonders bevorzugt wird die Naht maschinell hergestellt und ist somit insbesondere homogen und/oder weist eine etwa konstante Breite auf. Eine maschinelle Schweißnaht zeichnet sich insbesondere dadurch aus, dass sie gleichmäßig ist. Eine solche Verschweißung wird insbesondere so vorgenommen, dass der überlappende Bereich durch ein Verschweißwerkzeug hindurch bzw. das Verschweißwerkzeug darüber geführt wird. Das Durchführen erfolgt im Wesentlichen mit konstanter Geschwindigkeit. Das Verschweißwerkzeug übt dabei einen konstanten Druck aus und führt eine im Wesentlichen konstante Erhitzung der Folie im Bereich der Schweißnaht durch. Durch das Verschweißwerkzeug wird eine konstante Breite der Schweißnaht vorgegeben. Regelmäßig zeigt eine solche maschinelle Schweißnaht auch eine Andruckspur durch dieses Schweißwerkzeug. Durch das gleichzeitige Erhitzen und Andrücken kann sich auch die Materialstärke geringfügig verringern.

Eine maschinell hergestellte Schweißnaht ist somit über die Nahtlänge im Wesentlichen homogen und weist somit eine gleichmäßig hohe Verschweißgüte auf. Es werden punktuelle Schwachstellen vermieden und auch die Eigenschaften wie beispielsweise Fertigkeit, Breite und Stärke sind über die Länge der Naht gleichmäßig. Durch die Ausbringung einer maschinellen und damit gleichmäßigen Schweißnaht werden gleichzeitig überstehende Bereiche bei der Überlappung, die nicht verschweißt sind, vermieden. Dies kann dadurch erfolgen, dass die Folienbahn maschinell gleichmäßig abgeschnitten wird und ein gleichmäßiger Überlappungsbereich gewährleistet wird, der in der Maschine vollständig verschweißt werden kann. Anderenfalls besteht die Möglichkeit, nach dem Ausbringen der Schweißnaht insbesondere in derselben Maschine ein maschinelles und damit exaktes Abschneiden etwaiger überstehender Bereiche durchzuführen.

Ein Beispiel einer stabilen maschinellen Schweißnaht ist eine sogenannte Heizkeilnaht. Hierbei wird zwischen der Überlappung etwa mittig ein Heizkeil geführt und beidseitig davon beim Verschweißen jeweils ein Andruckbereich ausgebildet. Eine so hergestellte Schweißnaht kann in der Mitte in Längsrichtung der Naht einen durchgängigen Hohlraum aufweisen.

Gemäß einer Alternative ist eine Wurzelsperre zum Umgeben einer Pflanze, insbesondere einer Bambuspflanze vorgesehen, um das Austreiben ihrer Wurzeln zu verhindern, die einen Folienring aus einem thermoplastischen Material aufweist, wobei der Folienring nahtlos geschlossen ist. Der Folienring bildet somit eine Art Schlauchabschnitt eines entsprechend großen Schlauchs. Hierdurch wird selbst eine Schweißnaht vermieden und die Wurzelsperre weist insgesamt homogene Eigenschaften auf. Da auf jegliche Naht verzichtet wird, können hier auch keine Angriffspunkte für Wurzeln oder gar Defekte auftreten.

Günstig ist es, einen solchen Folienring durch ein Coextrusionsverfahren herzustellen. Hierbei wird durch das Coextrusionsverfahren ein Schlauch mit entsprechendem Durchmesser hergestellt und von dem Schlauch dann entsprechende Stücke als Folienring abgeschnitten.

Die weiteren oben zum Folienring mit Schweißnaht beschriebenen Merkmale betreffend die Größenangaben und die physikalischen Angaben und die zu verwendenden Materialien sind auch auf den Folienring, der gänzlich ohne Naht ausgebildet ist, anwendbar.

Vorzugsweise wird eine Wurzelsperre hergestellt durch die Verfahrensschritte:
- Zuschneiden einer Kunststoffbahn,
- Rollen oder Wickeln der Kunststoffbahn zu einem Folienring mit einem überlappenden Bereich und
- Verschweißen der Kunststoffbahn zu einem fest geschlossenen Folienring mittels einer Schweißmaschine bzw. einem Schweißautomaten im Bereich des überlappenden Bereichs.

Weiterhin wird eine Verpackung mit einer erfindungsgemäßen Wurzelsperre vorgeschlagen, wobei der Folienring zu einer doppellagigen Folie gefaltet ist und diese doppellagige Folie zu einer Rolle gerollt ist. D. h., eine Wurzelsperre, die im Gebrauch im Wesentlichen einen Zylinderabschnitt aufweist, wird zum Verpacken zunächst zu einer im Wesentlichen flachen, doppellagigen Folie gefaltet, indem zwei sich gegenüber liegende Seiten aufeinander gefaltet werden. Hierbei wird beispielsweise ein Folienring mit einer Höhe von 70 cm und einem Durchmesser von 2 m von einem Umfang von etwa 6,30 m zu einem flachen, doppellagigen Stück Folie gefaltet, dass etwa die Ausmaße 70 cm x 3,15 cm - oder etwas weniger - aufweist. An den Seiten weist dieses flache, doppellagige Stück Folie zwei Falze auf, die bei dem genannten Beispiel jeweils 70 cm lang wären. Beginnend mit einem dieser Falze wird sie dann zu einer Rolle aufgerollt. Die Rolle hat entsprechend dieselbe Höhe wie die bestimmungsgemäß verwendete Wurzelsperre. Die beiden Falze verlaufen hierbei parallel zu der Längsachse der so entstandenen Rolle. Zum Transport kann die so aufgerollte Wurzelsperre beispielsweise mit einem Band zusammengehalten werden, um ein selbsttätiges Entrollen zu vermeiden.

Um nun eine erfindungsgemäße Wurzelsperre in den Erdboden einzubringen, wird zuerst ein oben beschriebenes Band oder dergleichen von der Rolle entfernt, so dass diese sich weitestgehend ausrollt. Anschließend ist die entrollte Wurzelsperre etwa zu einem Folienring auszubreiten. Anschließend kann die Wurzelsperre direkt in den Boden gebracht und die Pflanze gepflanzt werden.

Eine alternative Ausführungsform beansprucht eine Wurzelsperre zum Umgeben einer Pflanze, insbesondere einer Bambuspflanze, um das Austreiben ihrer Wurzeln zu verhindern, mit einer zu einem Textilring geschlossenen Textilbahn aus einem Kunststoffmaterial, dadurch gekennzeichnet, dass die Verbindung zu dem Textilring durch eine durchgehende Nähnaht erfolgt, oder dass eine durchgehende Naht durch eine chemische Verbindung hergestellt ist, insbesondere als Verklebung hergestellt wird. Eine solche Wurzelsperre aus Textil vermeidet ebenfalls die Verwendung von Metallschienen und damit die oben beschriebenen damit zusammenhängenden Nachteile. Das Textil ist verhältnismäßig leicht und kann durch eine Nähnaht vorbereitet und fertig vorbereitet und verpackt zum Endbenutzer transportiert werden. Eine Vielzahl von Merkmalen des Folienrings aus thermoplastischem Material ist auf den Textilring übertragbar. Hierzu gehören insbesondere die verwendeten Größenangaben, die UV-Beständigkeit, eine überlappende oder Stegnaht sowie die gleichmäßige und maschinelle Ausgestaltung der Naht. Entsprechend ist natürlich eine gleichmäßige Verschweißung übertragen auf den Textilring als gleichmäßige Vernähung entsprechend zu verstehen. Je nach Material des Textils kommt aber auch für den Textilring eine Verschweißung in Betracht.

Erfindungsgemäß wird auch eine Wurzelsperre vorgeschlagen, die einen als Schlauchabschnitt ausgebildeten Textilring zum Umgeben der Pflanze aufweist, der nahtlos geschlossen ist. Insbesondere wird ein solcher Textilring statt durch Schließen einer Textilbahn zu einem solchen Textilring durch Herstellen eines Textilschlauchs gefertigt, wobei von diesem Textilschlauch jeweils ein Abschnitt als Textilring abgetrennt wird. Das Textil wird also bereits in Form eines Schlauches gefertigt und das Verbinden zu einem Textilring mittels Naht oder anderen Verbindungen entfällt. Bevorzugt weist die Textilbahn ein Vlies auf oder ist ein Vlies. Ein solches Vlies, das häufig auch als "Non woven" bezeichnet wird, ist einfach zu fertigen und kann dabei eine hohe Festigkeit aufweisen. Gemäß einer Ausführungsform wird die Textilbahn mit einem Material, insbesondere einem thermoplastischen Material beschichtet, durchtränkt und / oder lackiert. Eine solche Behandlung ist so vorzusehen, dass Wurzeln der Pflanze am Wachsen durch die Textilbahn gehindert werden. Es kann zunächst erreicht werden, dass etwaige Poren des Textils geschlossen werden und somit Angriffsmöglichkeiten auch für kleinste Wurzeln entfallen. Bei einseitiger Ausbildung dieser Behandlung, insbesondere Beschichtung oder Lackierung ist diese zur Wurzelsperreninnenseite hin, also zu den zu erwartenden Wurzeln hin, vorzusehen. Des Weiteren kann durch die genannte Behandlung auch die Festigkeit des Textils, also der Fäden und / oder der Fasern untereinander erhöht werden und es kann auch eine für Wurzeln undurchdringbare Schicht auf dem Textil geschaffen werden. Insbesondere bei der Behandlung mit einem thermoplastischen Material kann eine etwaige Naht auch für eine Textilbahn durch Verschweißen vorgenommen werden.

Die erfindungsgemäßen Merkmale, die in Zusammenhang mit einem Folienring beschrieben wurden, sind auf eine Wurzelsperre mit einem Textilring grundsätzlich übertragbar. Dabei ist für den Fachmann klar, dass jeweils "Folienring" sinngemäß durch "Textilring" zu ersetzen ist.

Gemäß jedenfalls einer bevorzugten Ausführungsform wird die Wurzelsperre werkseitig als fertig geschlossener Ring, insbesondere als Folienring oder als Textilring vorgefertigt. Eine solche Wurzelsperre braucht somit von dem Endverbraucher lediglich ausgepackt und um die gewünschte Pflanze bzw. Pflanzen herum angebracht zu werden. Das lästige, zeitaufwändige und zugleich fehleranfällige Herstellen eines Folien- oder Textilrings vor Ort durch den Anwender entfällt somit. Eine Fehleranfälligkeit beim Herstellen einer Verbindung begründet sich auch darin, dass insbesondere der Endverbraucher jeweils über sehr unterschiedliche Fertigkeiten verfügt und ein fachgerechtes Herstellen somit nicht immer gewährleistet ist.

Zudem weist eine industriell vorgefertigte Naht generell hohe Qualitäts- und insbesondere Festigkeitsmerkmale auf. Auch eine gleichmäßige Ausbildung der Naht und auch der Wurzelsperre insgesamt zeichnet eine werkseitig vorgefertigte Wurzelsperre aus. Natürlich gilt dies erst recht für Wurzelsperren mit einem nahtlosen Folien- bzw. Textilring. Solche Qualitäts- und Festigkeitsmerkmale sind es auch, die eine werkseitig vorgefertigte Wurzelsperre von einer manuell hergestellten oder vor Ort hergestellten Wurzelsperre unterscheiden können.

Bevorzugt werden solche werkseitig zu einem Folien- bzw. Textilring vorgefertigten Wurzelsperren platzsparend verpackt, indem der Folienring bzw. Textilring zu einer doppellagigen Folien- bzw. Textilbahn zusammengefaltet werden und diese doppellagige Folien- bzw. Textilbahn zu einer Rolle gerollt wird. Dieses Verpacken der Wurzelsperre ist - wie dem Fachmann unmittelbar klar ist - grundsätzlich unabhängig davon, ob die vorgefertigte Wurzelsperre einen Folienring oder einen Textilring aufweist und auch unabhängig davon, ob der Folien- bzw. Textilring mit Naht oder nahtlos ausgestaltet ist.

Im Übrigen sei darauf hingewiesen, dass unter einem Folienring oder einem Textilring ein Gegenstand zu verstehen ist, der einem Schlauchabschnitt entspricht oder auch ein Schlauchabschnitt ist, wobei der Schlauch aus einer entsprechenden Folie bzw. entsprechendem Textilmaterial besteht.

Ein Textilring weist bevorzugt ein Polypropylen non-woven Geotextil mit einer darauf thermisch angebrachten, extrudierten Polypropylenschicht als coating auf. Vorzugsweise werden sowohl für den Folienring als auch für den Textilring recyclebare Materialien verwendet.

Eine Folie oder Textil, insbesondere beschichtetes, durchtränktes und / oder lackiertes Textil, das dazu geeignet ist zu verhindern, dass Wurzeln der Pflanze durch die Folie oder Textilbahn wachsen, wird auch durchwurzelungsfest genannt.

Auch bei der Verwendung eines Textilrings werden in bevorzugten Ausführungsformen die Enden der einzelnen Bahnen miteinander verklebt, vernäht oder auch durch eine durchgehende Schweißnaht miteinander verbunden und als fertig geschlossener Ring ausgeliefert, so dass der Kunde bzw. Anwender die Ware anwendungsfertig angeliefert bekommt. Dies stellt eine Verbesserung gegenüber bisherigen Produkten dar. Bisher wurden nämlich Textilbahnen oder dergleichen als aufgerollte Rollenabschnitte angeboten, wie dies beispielsweise von einer Tapete bekannt ist, die dann vom Endverbraucher bzw. Anwender nach dem Kauf im Handel dann vor Ort selbst zusammengeklebt werden müssen. Gegebenenfalls ist auch zuvor ein Kürzen vor Ort vorzunehmen. Hierbei trägt der Anwender bzw. Käufer das Risiko der fachgerechten Verklebung oder anderen Verbindung beider Bahnenden. Demgegenüber kann erfindungsgemäß ein solches Risiko zumindest verringert, wenn nicht sogar ausgeschlossen werden, da erfindungsgemäß eine Verbindung der beiden Bahnenden bereits bei der Produktion bzw. Herstellung vorgenommen wird.

Nachfolgend wird die Erfindung beispielhaft anhand einiger Ausführungsformen unter Zuhilfenahme der begleitenden Zeichnungen näher erläutert.

Es zeigen:
- Figur 1: eine erfindungsgemäße Wurzelsperre mit Schweißnaht in einer schematischen Darstellung,
- Figur 2: eine erfindungsgemäße Wurzelsperre gemäß einer weiteren Ausführungsform ohne Schweißnaht in einer schematischen Darstellung,
- Figur 3: eine Schweißnaht einer erfindungsgemäßen Wurzelsperre gemäß einer Ausführungsform in einer schematischen Darstellung,
- Figur 4: eine Schweißnaht einer erfindungsgemäßen Wurzelsperre gemäß einer weiteren Ausführungsform in einer schematischen Darstellung,
- Figur 5: eine als Stegnaht ausgebildete Schweißnaht einer Wurzelsperre gemäß einer weiteren Ausführungsform in einer schematischen Darstellung und
- Figur 6: eine zum Transport aufgerollte Wurzelsperre gemäß einer Ausführungsform der Erfindung.

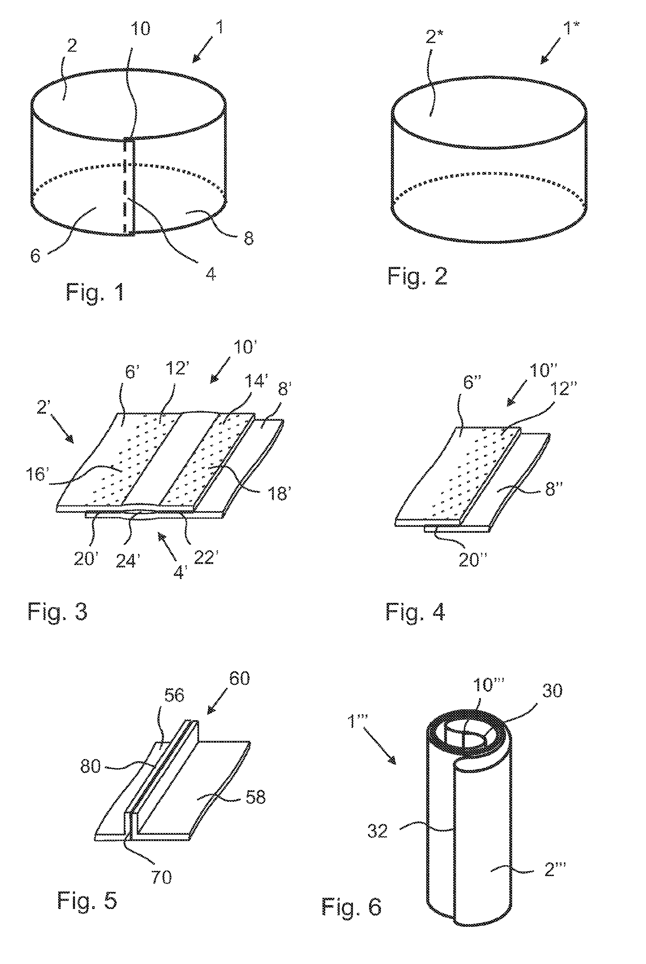

Figur 1 zeigt schematisch die Wurzelsperre 1 im Wesentlichen als Zylinder aus einer Kunststoffbahn 2. Die Wurzelsperre 1 in einer praktischen Ausführung wird jedoch regelmäßig nicht exakt zylindrisch sein, sondern wird vielmehr eine etwa elliptische und unregelmäßige Form und unterschiedliche Wellen und gegebenenfalls auch Ausbeulungen oder Einbeulungen aufweisen. Dies hängt zum einen von einem verpackten Zustand ab, den die Wurzelsperre 1 zuvor gehabt haben kann. Zum anderen hängt die Form auch von der Benutzung sowie insbesondere vom Erdreich ab, in das die Wurzelsperre 1 eingebracht ist. Die Höhe einer Wurzelsperre 1 entsprechend der Zylinderlänge liegt üblicherweise im Bereich zwischen 50 und 200 cm. Der Durchmesser des gemäß Figur 1 dargestellten Zylinders entspricht etwa dem mittleren Durchmesser einer nicht ideal zylindrisch geformten Wurzelsperre 1.

Damit die Kunststoffbahn 2 die Wurzelsperre 1 als Folienring wie dargestellt formen kann, bildet sie einen überlappenden Bereich 4, in dem sich ein erstes Ende 6 ein zweites Ende 8 der Kunststoffbahn 2 überlappt. In diesem überlappenden Bereich 4 ist eine Schweißnaht 10 über die vollständige Höhe der Wurzelsperre 1 ausgebracht.

Die Wurzelsperre 1* gemäß Figur 2 ist als geschlossener Folienring gänzlich ohne Naht ausgebildet. Auch für die Wurzelsperre 1 * gemäß Figur 2 gilt, dass sie in einer praktischen Ausführungsform regelmäßig von einer idealisierten Zylinderform abweicht. Lediglich die Höhe der Wurzelsperre 1* und damit die Breite der nahtlos umlaufenden Kunststoffbahn 2* ist auch bei praktischen Ausgestaltungen als etwa konstant anzunehmen. Dies gilt auch für die Wurzelsperre 1 gemäß Figur 1.

Der in Figur 2 gezeigte Folienring weist damit die Gestalt eines Schlauchabschnitts auf. Dies gilt auch für Folienringe, die nicht die dargestellte, idealisierte Zylinderform aufweisen. Außerdem gelten die Erläuterungen zu den vorliegenden Figuren, insbesondere zu den Figuren 1 und 2 sinngemäß auch für erfindungsgemäße Textilringe.

Figur 3 zeigt schematisch eine Schweißnaht 10', die als Heizkeilschweißnaht ausgebildet ist. Bei einer solchen Heizkeilschweißnaht wird ein keilförmiges Heizelement zwischen den beiden überlappenden und zu verschweißenden Enden 6' und 8' geführt, um die entsprechende Schmelzwärme aufzubringen. Die beiden Enden 6' und 8' werden hierbei über einen solchen Heizkeil zusammengeführt und dann zusammengedrückt. Das Heizelement ist entsprechend als Heizkeil ausgebildet und kann beispielsweise elektrisch erhitzt werden. In einer anderen Variante strömt aus dem Heizelement heiße Luft aus.

Zur Veranschaulichung ist die Schweißnaht 10' verkürzt dargestellt. Hierbei überlappt das erste Ende 6' der Kunststoffbahn 2' das zweite Ende 8' derselben Kunststoffbahn 2'. In dem überlappenden Bereich 4' sind von der Schweißnaht 10' zwei Andruckstreifen 12' und 14' dargestellt. Auf den Andruckstreifen 12' und 14' ist noch ein Muster 16' bzw. 18' zu erkennen, das beim Herstellen der Schweißnaht durch ein Andruckwerkzeug hervorgerufen wurde. Unterhalb jedes Musters 16', 18' befindet sich jeweils ein Schmelzbereich 20' bzw. 22'. In diesem Bereich sind die Enden 6' und 8' durch Anschmelzen bei gleichzeitigem Andrücken miteinander verschweißt worden. Die beiden Schmelzbereiche 20' und 22' erstrecken sich jeweils vollständig unterhalb der Andruckstreifen 12' bzw. 14' entlang der Schweißnaht 10'.

Zwischen den Schmelzbereichen 20' und 22' ist ein durchgehender Prüfkanal 24' geblieben. In diesem Kanal wurden die Bereiche für spätere Prüfzwecke nicht verschweißt.

Es ist zu erkennen, dass der Andruckstreifen 12' und der Schmelzbereich 20' bis zum Ende des zweiten Endes 8' reicht. Ebenso reicht der Andruckstreifen 14' und der Schmelzbereich 22' bis zum Ende des ersten Endes 6'. Bei der dargestellten Schweißnaht 10' ergibt sich somit kein überstehender Bereich und eine Wurzel hat weder von außen noch von innen der betreffenden Wurzelsperre einen Angriffsbereich und kann die Schweißnaht 10' daher nicht durchdringen.

Die Schweißnaht 10" der Figur 4 ist gegenüber der Schweißnaht 10' der Figur 3 einfach ausgestaltet. Sie weist lediglich einen Andruckstreifen 12" und einen Schmelzbereich 20" auf. Allein hierdurch wird eine feste Verbindung zwischen dem ersten und zweiten Ende 6" und 8" erreicht. Auch bei der Schweißnaht 10" gemäß der Figur 4 ist der Schmelzbereich 20" über den kompletten überlappenden Bereich ausgebildet, ohne dass das erste Ende 6" oder das zweite Ende 8" einen überstehenden Bereich ausbilden.

Figur 5 zeigt eine so genannte Stehnaht oder Stegnaht. Die Verbindung erfolgt hierbei so, dass von dem ersten und zweiten Ende 56, 58 jeweils ein Streifen im Wesentlichen abgewinkelt und zu einem Steg 80 zusammengefügt sind. Der Steg 80 weist als Verbindung einen Schmelzbereich 70 auf. Somit bildet der Steg 80 zusammen mit dem Schmelzbereich 70 die Naht 60.

Die Wurzelsperre 1 "' der Figur 6 ist in aufgerolltem Zustand zum Transport dargestellt. Ihre Ausrichtung entspricht den Wurzelsperren 1 und 1* gemäß Figur 1 bzw. 2. Um das Aufrollen zu ermöglichen weist die Kunststoffbahn 2'" zwei Falze 30 und 32 auf, von denen einer in der Rolle innen und der andere außen angeordnet ist. Die Falze 30, 32 sind dabei so ausgebildet, dass sie keinen Knick sondern vielmehr eine sehr starke Biegung aufweisen. Die Falze 30, 32 als auch die Naht 10"' stehen gemäß der Darstellung etwa senkrecht. Sie verlaufen dabei parallel zueinander.

## Patentansprüche

1. Wurzelsperre zum Umgeben einer Pflanze, insbesondere einer Bambuspflanze, um das Austreiben ihrer Wurzeln zu verhindern, mit einer zu einem Folienring geschlossenen Kunststoffbahn aus einem thermoplastischem Material und/oder anderem Kunststoffmaterial zum Umgeben der Pflanze, **dadurch gekennzeichnet, dass** die Verbindung zu dem Folienring durch eine durchgehende Schweißnaht erfolgt, oder durch eine durchgehende Naht, die durch eine chemische Verbindung hergestellt wird, insbesondere als Verklebung hergestellt wird.

2. Wurzelsperre nach Anspruch 1, **dadurch gekennzeichnet, dass** das thermoplastische Material oder andere Kunststoffmateriale ein aus der folgenden Gruppe ausgewähltes Material umfasst:
- PEHD
- PELD
- PELLD
- PP
- PO
- ECB
- TPO
- FPO
- PVC

3. Wurzelsperre nach einem der vorstehenden Ansprüche 1 oder 2, **dadurch gekennzeichnet, dass** die Materialstärke zwischen 0,5 mm und 10 mm beträgt, insbesondere zwischen 1 mm und 3 mm.

4. Wurzelsperre nach einem der vorstehenden Ansprüche, **dadurch gekennzeichnet, dass** der mittlere Durchmesser zwischen 0,75 m und 5 m beträgt.

5. Wurzelsperre nach einem der vorstehenden Ansprüche, **dadurch gekennzeichnet, dass** die Höhe des Folienrings zwischen 50 cm und 200 cm, insbesondere zwischen 70 cm und 150 cm beträgt.

6. Wurzelsperre nach einem der vorstehenden Ansprüche, **dadurch gekennzeichnet, dass** das Material einen Härtegrad von 10-70 N/mm² hat.

7. Wurzelsperre nach einem der vorstehenden Ansprüche, **dadurch gekennzeichnet, dass** das Material ein Elastizitätsmodul bis 1000 N/mm² aufweist.

8. Wurzelsperre nach einem der vorstehenden Ansprüche, **dadurch gekennzeichnet, dass** die Wurzelsperre UV-beständig und/oder nagetierbeständig ist.

9. Wurzelsperre nach einem der vorstehenden Ansprüche, **dadurch gekennzeichnet, dass** die Kunststoffbahn im Bereich der Naht überlappt.

10. Wurzelsperre nach einem der vorstehenden Ansprüche, **dadurch gekennzeichnet, dass** die Naht als Stehnaht bzw. Stegnaht ausgebildet ist mit einem Stegbereich, der vorzugsweise zum Inneren der Wurzelsperre weist.

11. Wurzelsperre nach Anspruch 9 oder 10, **dadurch gekennzeichnet, dass** die Überlappung zumindest zum Inneren des Folienrings hin vollständig verschweißt ist.

12. Wurzelsperre nach einem der vorstehenden Ansprüche, **dadurch gekennzeichnet, dass** die Schweißnaht bzw. Naht maschinell hergestellt ist, insbesondere homogen ist und/oder eine etwa konstante Breite aufweist.

13. Wurzelsperre nach Anspruch 12, **dadurch gekennzeichnet, dass** die Naht als Heizelementschweißnaht, insbesondere als Heizkeilnaht oder Heißluftelementnaht ausgebildet ist.

14. Wurzelsperre nach einem der vorstehenden Ansprüche, hergestellt durch die Verfahrensschritte:
- Zuschneiden einer Kunststoffbahn,
- Rollen der Kunststoffbahn zu einem Folienring mit einem überlappenden Bereich und
- Verschweißen der Kunststoffbahn zu einem fest geschlossenen Folienring mittels einer Schweißmaschine bzw. einem Schweißautomaten.

15. Wurzelsperre zum Umgeben einer Pflanze, insbesondere einer Bambuspflanze, um das Austreiben ihrer Wurzeln zu verhindern, mit einem Folienring aus einem thermoplastischem Material, wobei der Folienring nahtlos geschlossen ist.

16. Wurzelsperre nach Anspruch 15, **dadurch gekennzeichnet, dass** der Folienring durch ein Coextrusionsverfahren hergestellt ist.

17. Wurzelsperre nach Anspruch 15 oder 16, weiter umfassend die Merkmale gemäß wenigstens einem der Ansprüche 2-9.

18. Wurzelsperre zum Umgeben einer Pflanze, insbesondere einer Bambuspflanze, um das Austreiben ihrer Wurzeln zu verhindern, mit einer zu einem Textilring geschlossenen Textilbahn aus einem Kunststoffmaterial zum Umgeben der Pflanze, **dadurch gekennzeichnet, dass** die Verbindung zu dem Textilring durch eine durchgehende Nähnaht oder Schweißnaht erfolgt, oder dass eine durchgehende Naht durch eine chemische Verbindung hergestellt wird, insbesondere als Verklebung hergestellt wird.

19. Wurzelsperre zum Umgeben einer Pflanze, insbesondere einer Bambuspflanze, um das Austreiben ihrer Wurzeln zu verhindern, mit einem als Schlauchabschnitt ausgebildeten Textilring zum Umgeben der Pflanze, wobei der Textilring nahtlos geschlossen ist.

20. Wurzelsperre nach Anspruch 18 oder 19 **dadurch gekennzeichnet, dass** die Textilbahn ein Vlies aufweist oder ist und / oder mit einem Material, insbesondere einem thermoplastischen Material beschichtet, durchtränkt und / oder lackiert ist zum Verhindern, dass Wurzeln der Pflanze durch die Textilbahn wachsen.

21. Wurzelsperre nach einem der Ansprüche 18-20, **gekennzeichnet durch** wenigstens eines der Merkmale der Ansprüche 3-12.

22. Wurzelsperre nach einem der vorstehenden Ansprüche, **dadurch gekennzeichnet, dass** die Wurzelsperre werkseitig als fertig geschlossener Ring, insbesondere Folienring oder Textilring vorgefertigt ist.

23. Verpackung mit einer Wurzelsperre nach einem der vorstehenden Ansprüche, wobei der Folienring bzw. Textilring zu einer doppellagigen Folie bzw. Textilbahn zusammengefaltet ist und diese doppellagige Folie bzw. Textilbahn zu einer Rolle gerollt ist.

24. Verpackung nach Anspruch 23, **dadurch gekennzeichnet, dass** die zusammengefaltete und gerollte Folie bzw. Textilbahn zwei parallel zu der Längsachse der Rolle verlaufende Falze aufweist.

25. Verfahren zum Herstellen einer Wurzelsperre zum Umgeben einer Pflanze, insbesondere einer Bambuspflanze, um das Austreiben ihrer Wurzeln zu verhindern, umfassend die Verfahrensschritte:
- Zuschneiden einer Kunststoffbahn oder Textilbahn,
- Rollen der Kunststoffbahn bzw. Textilbahn zu einem Folienring bzw. Textilring mit einem überlappenden Bereich und
- Verschweißen, Verkleben oder Vernähen der Kunststoffbahn bzw. Textilbahn zu einem fest geschlossenen Folienring bzw. Textilring mittels einer Schweißmaschine oder einem Schweißautomaten, einer Klebemaschine bzw. einer Nähmaschine.

26. Verfahren zum Herstellen einer Wurzelsperre zum Umgeben einer Pflanze, insbesondere einer Bambuspflanze, um das Austreiben ihrer Wurzeln zu verhindern, umfassend die Verfahrensschritte
- Herstellen eines nahtlosen Folienschlauchs bzw. Textilschlauchs und
- Abtrennen eines Schlauchabschnitts des Folienschlauches bzw. Textilschlauches als einen nahtlosen Folienring bzw. nahtlosen Textilring zum Umgeben der Pflanze.
